# EUROPÄISCHE PATENTSCHRIFT

(11) **EP 1 363 819 B1**
(45) Veröffentlichungstag und Bekanntmachung des Hinweises auf die Patenterteilung: **17.08.2011**
(21) Anmeldenummer: 02712743.0
(22) Anmeldetag: 05.02.2002
(51) Int. Cl.: B60T 8/36

(54) **ELEKTROHYDRAULISCHE DRUCKREGELVORRICHTUNG**
ELECTROHYDRAULIC PRESSURE CONTROL DEVICE
DISPOSITIF DE REGULATION DE PRESSION ELECTROHYDRAULIQUE

(30) Priorität: 21.02.2001 DE 10108208
(43) Veröffentlichungstag der Anmeldung: 26.11.2003
(73) Patentinhaber: ROBERT BOSCH GMBH, 70442 Stuttgart (DE)
(72) Erfinder: JOCHAM, Reinhold, 72379 Hechingen (DE); JARES, Peter, 71069 Sindelfingen (DE)
(86) Internationale Anmeldenummer: PCT/DE2002/000403
(87) Internationale Veröffentlichungsnummer: WO 2002/066305

(56) Entgegenhaltungen:
- DE-A- 4 343 325
- DE-A- 4 402 735
- DE-A- 19 718 835
- DE-A- 19 940 696

## Beschreibung

### Stand der Technik

Die Erfindung geht aus von einer elektrohydraulischen Druckregelvorrichtung, insbesondere von einer Bremsschlupfregelvorrichtung für Kraftfahrzeuge gemäß dem Oberbegriff von Anspruch 1.

Bei der Herstellung solcher Druckregelvorrichtungen ergibt sich das Problem, dass die Ventildome in die Spulenöffnungen der am Spulenträger gehaltenen Spulen sowie die Kontaktelemente in die Öffnungen der Kopfplatte eingeführt werden müssen, wobei eng tolerierte Passungsspiele erforderlich sind, weil bereits ein geringer Achsversatz der Hydraulikventile den Montagevorgang der Spulen und der Kopf- platte erschweren.

Um diesem Problem zu begegnen, wird gemäß der DE 41 00 967 A1 eine elektrohydraulische Druckregelvorrichtung der eingangs erwähnten Art vorgeschlagen, bei welcher die Spulen von einer mit dem Spulenträger in Verbindung stehenden elastischen Halterung gehalten sind, damit während des Montagevorgangs Ausrichtbewegungen der Spulen stattfinden können. Die Fixierung der Spulen am Spulenträger erfolgt auch nach Einführen der Ventildome in die Spulenöffnungen ausschließlich durch die elastische Halterung. Diese Vorgehensweise hat jedoch den Nachteil, dass sich die elastische Halterung bei größeren Achsabweichungen stark verformt und dann Spannungsspitzen entstehen, welche die Dauerfestigkeit der Halterung herabsetzen können. Darüber hinaus sind vor allem Bremsdruckregelvorrichtungen von Kraftfahrzeugen oft einer starken Schwingungsbelastung ausgesetzt, so dass sich bei der vorliegend nachgiebigen Lagerung der Spulen Schwingungsprobleme beispielsweise in Form von Resonanzanregungen ergeben können. Schließlich entstehen aufgrund der während der Montage auftretenden Verformung der elastischen Halterung unerwünschte Reibkräfte zwischen den Spulen und den Ventildomen.

Bei der gattungsbildenden DE 43 43 325 A1 werden die Magnetspulen von unten her in Schächte eingesetzt und müssen deshalb gegen ein schwerkraftbedingtes Herausfallen aus den Schächten gesichert werden. Dies erfolgt gemäß der bekannten Druckschrift dadurch, dass die Magnetspulen Haltspinnen aufweisen, an die gleichmäßig am Umfang verteilte elastische Haltefinger angeflanscht sind. Demgegenüber weisen die Schächte im Bereich der Haltefinger an den Schachwänden Aussparungen auf, so dass in diesem Bereich der lichte Durchmesser eines Schachts dem durch die Haltefinger vorgegebenen Durchmesser entspricht. Beim Einführen der Magnetspule in den Schacht stößt nun eine nach außen am freien Ende eines Haltefingers angebrachte Rastnase an den Rand des Schachts an. Da die Haltefinger elastisch sind, wird die Rastnase beim weiteren Einführen der Magnetspule an die Mantelfläche der Magnetspule gedrückt, wobei bei vollständig eingeführter Magnetspule sich die Haltefinger mit den Rastnasen in die Aussparungen im Schacht entspannen, so dass ein Herausfallen der Magnetspule aus dem Schacht verhindert wird.

Der Vorteil der Haltefinger im eingebauten Zustand der Magnetspulen besteht darin, dass diese in senkrechter Richtung zu ihrer Längsachse aufgrund der elastischen Haltefinger in geringem Maße verschiebbar sind und dadurch zwischen dem Ventilblock und dem Spulenhalter auftretende Maßungenauigkeiten ausgeglichen werden.

Nachteilig ist hierbei jedoch, dass die Haltespinne mit den Haltefingern einen relativ hohen Fertigungsaufwand bedingt. Weiterhin ergibt sich wegen der zusätzlichen Haltespinne und der Haltefinger ein relativ großer Durchmesser der Schächte, weshalb sich bei üblicherweise mehreren nebeneinander angeordneten Magnetspulen ein relativ hoher Bauraumbedarf ergibt. Nicht zuletzt üben axiale Federelemente ständig eine elastische Kraft auf die Magnetspulen aus, woraus sich die bereits oben erwähnten Nachteile ergeben.

Bei der DE 197 18 835 A1 sind die Spulen in Durchbrüchen einer Trägerplatte durch Anschlussdrähte mit elastischen Bereichen axial gesichert, wodurch sich ebenfalls die bereits oben erwähnten Nachteile ergeben.

### Vorteile der Erfindung

Da die Spulen während ihrer Ausrichtbewegungen an den Spulenkörper nicht elastisch angebunden sind, können sie sich frei und zwanglos nach der jeweiligen Lage der Ventilachse des zugeordneten Ventils ausrichten. Hierdurch werden unerwünschte Reibungen und Verzwängungen zwischen den Bauteilen weitgehend vermieden. Die lageorientierte Aufnahme am Spulenträger gewährleistet, dass die Kontaktelemente der Spulen in der korrekten Winkelposition relativ zu den Öffnungen der später auf das Spulengehäuse aufzusetzenden Kopfplatte ausgerichtet sind. Da die Spulen nach dem Ausrichten im Spulengehäuse ohne Elastizitäten starr festgelegt sind, werden Schwingungsprobleme, die sich aus einer zu nachgiebigen Lagerung ergeben könnten, von vorneherein ausgeschlossen.

Durch die in den Unteransprüchen aufgeführten Maßnahmen sind vorteilhafte Weiterbildungen und Verbesserungen der Erfindung möglich.

Besonders bevorzugt bildet der axiale Anschlag zugleich eine Verdrehsicherung für die Spulen und weist wenigstens einen von der Lagerhülsenwand nach radial innen ragenden stiftförmigen Vorsprung auf, der in eine radial äußere Aussparung der Spule mit im Vergleich zum Vorsprung größerer radialer Erstreckung eingreifbar ausgebildet ist. Eine solche Vorsprung-/Aussparungspaarung hat daher eine Doppelfunktion, indem sie einerseits als axialer Anschlag und andererseits als Verdrehsicherung wirkt, wodurch sich die Teilevielfalt der Bremsschlupfregelvorrichtung in vorteilhafter Weise reduziert.

Eine weitere Maßnahme sieht vor, dass der Niederhalter durch die am Spulengehäuse befestigbare Kopfplatte mit von ihr in Richtung der Spulen weg ragenden und mit den Ventilachsen koaxialen Zylinderabschnitten gebildet wird, welche an den Stirnflächen der Spulen zur axialen Anlage bringbar ausgebildet sind.

### Zeichnungen

Ein Ausführungsbeispiel der Erfindung ist in der Zeichnung dargestellt und in der nachfolgenden Beschreibung näher erläutert. In den Zeichnungen zeigt
- Fig.1: einen Querschnitt durch einen elektrischen Teil einer Bremsschlupfregelvorrichtung für Kraftfahrzeuge;
- Fig.2: die Einzelheit X von Fig.1;
- Fig.3: eine schematische Darstellung der Montage des elektrischen Teils der Bremsschlupfregelvorrichtung von Fig.1;
- Fig.4: eine Draufsicht auf ein Spulengehäuse des elektrischen Teils von Fig.1 ohne Spulen.

### Beschreibung des Ausführungsbeispiels

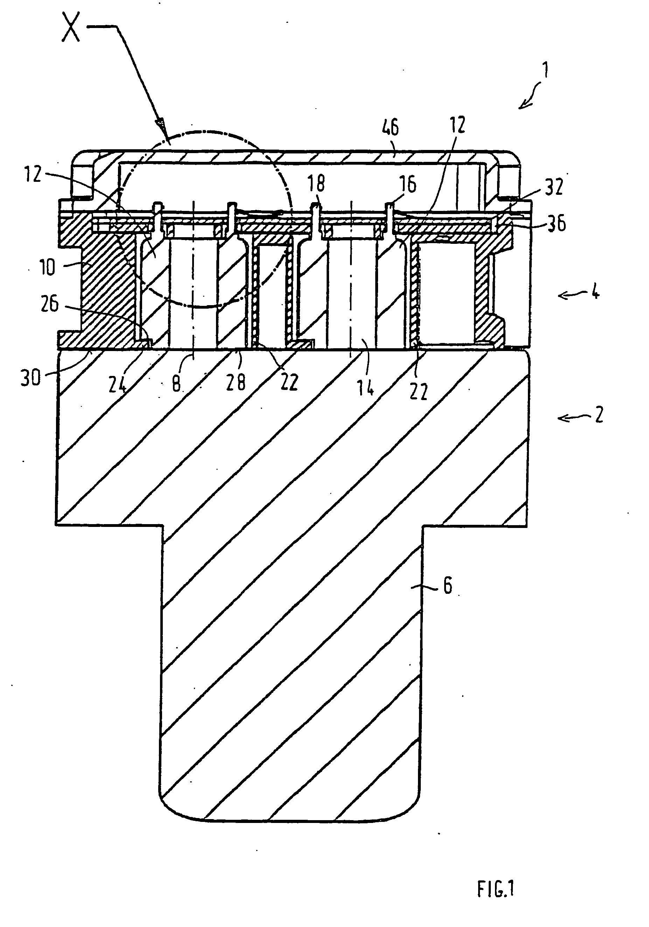

In Fig.1 ist mit 1 eine Bremsschlupfregelvorrichtung eines Kraftfahrzeugs dargestellt, welche aus einem hydraulischen Teil 2 und einem elektrischen Teil 4 besteht. Der hydraulische Teil 2 beinhaltet mehrere elektromagnetisch betätigbare, in einem Ventilblock 6 aufgenommene Hydraulikventile mit den Ventilblock 6 in Richtung einer Ventilachse 8 zumindest teilweise überragenden Ventildomen, wobei die Hydraulikventile in Fig.1 aus Maßstabsgründen nicht dargestellt sind.

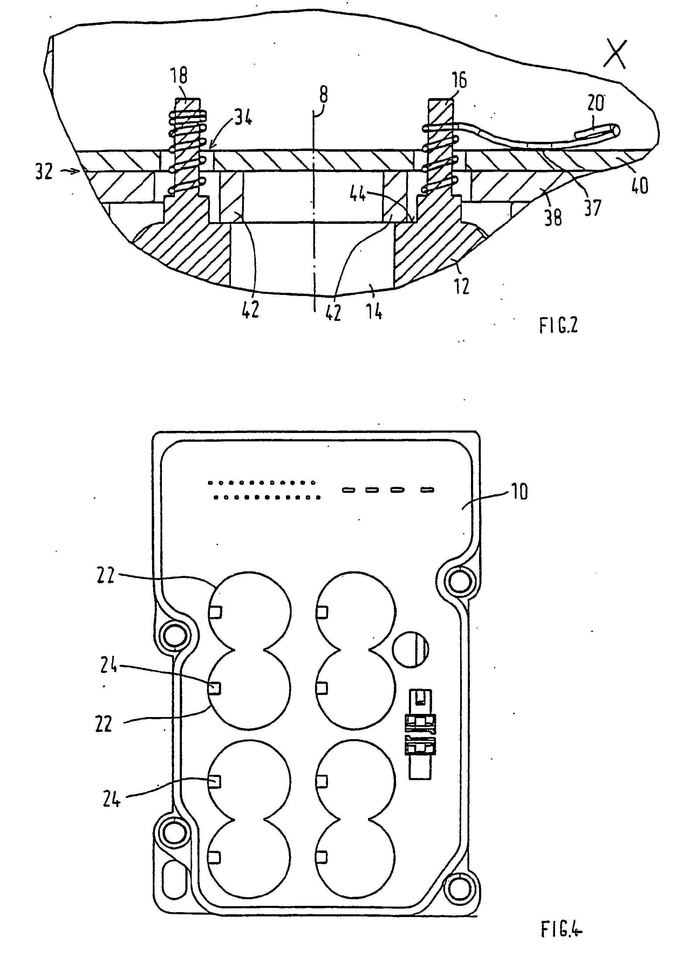

Die Ventildome sind von je einer von einem Spulenträger 10 gehaltenen elektrischen Spule 12 umschlossen, die eine mittige zylindrische Öffnung 14 aufweist. An die Spulen 12 sind kopfseitig je zwei parallel zur Ventilachse 8 nach oben ragende Stifte 16, 18 angesetzt, auf welchen die Enden 20 von Spulendrähten schraubenförmig aufgewikkelt sind, wie insbesondere am in Fig.2 linken Stift 18 dargestellt ist

Der Spulenträger wird durch ein auf den Ventilblock 6 aufsetzbares, vorzugsweise als Spritzgußformling ausgeführtes Spulengehäuse 10 gebildet, in welchem zu den Ventilachsen 8 koaxiale Durchgangsöffnungen als Lagerhülsen 22 ausgebildet sind, in welchen die Spulen 12 aufgenommen sind. Der Innendurchmesser der Lagerhülsen 22 ist zur Bereitstellung von Bewegungsspiel für die Spulen 12 in einer Ebene senkrecht zu den Ventilachsen 8 größer als der Außendurchmesser der zugeordneten Spule 12.

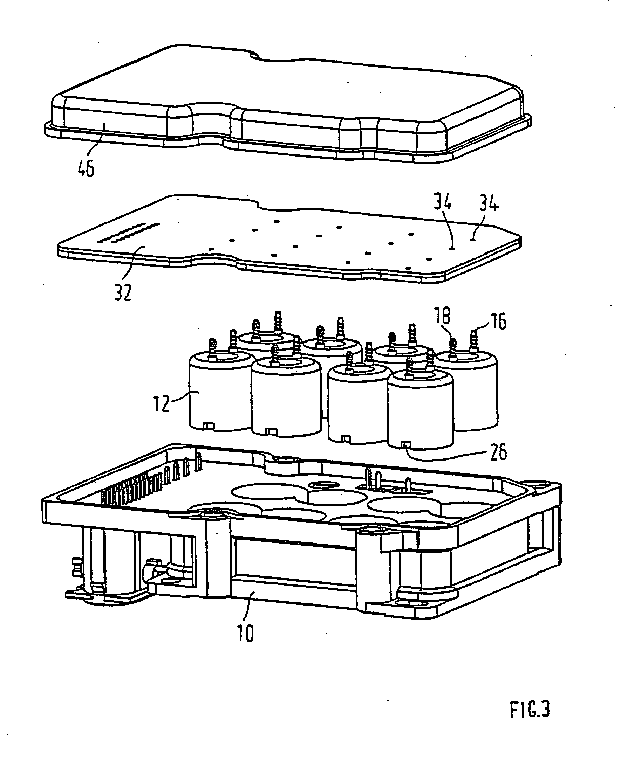

Zur Montage des elektrischen Teils 4 der Bremsschlupfregelvorrichtung 1 werden zunächst die Spulen 12 von oben in das Spulengehäuse 10 lageorientiert eingesetzt, wie insbesondere aus Fig.3 hervorgeht. Die axiale Position der Spulen wird durch je einen axialen Anschlag festgelegt, der beispielsweise durch wenigstens je einen von der Lagerhülse 22 nach radial innen ragenden stiftförmigen Vorsprung 24 gebildet wird, der in eine radial äußere, zum unteren Rand hin offene Aussparung 26 der Spule 12 eingreifbar ausgebildet ist, wie Fig.1 und Fig.4 zeigt. Die Aussparung 26 hat einen zum Vorsprung 24 komplementären Querschnitt, weist allerdings eine größere radiale Erstrekkung als dieser auf, so daß ein begrenztes, aber innerhalb der Grenzen zwangloses Bewegungsspiel der Spule 12 relativ zum Spulengehäuse 10 möglich ist. Die Vorsprünge 24 sind vorzugsweise jeweils an dem zum Ventilblock 6 weisenden Rand einer jeden Lagerhülse 22 und die Aussparungen 26 vorzugsweise jeweils an dem zum Ventilblock 6 weisenden Rand der zugeordneten Spule 12 angeordnet, so daß die zum Ventilblock 6 weisenden Stirnflächen 28 der Spulen 12 mit der zum-Ventilblock 6 weisenden Bodenfläche 30 des Spulengehäuses 10 bündig sind.

Gemäß einem weiteren Montageschritt wird das mit Spulen 12 vormontierte Spulengehäuse 10 auf den Ventilblock 6 aufgesetzt, wobei die Ventildome von unten in die zylindrischen Öffnungen 14 der Spulen 12 eingreifen und diese aufgrund ihres Bewegungsspielraumes in der Ebene senkrecht zu den Ventilachsen 8 ausrichten. Auf diese Weise können Lageabweichungen der Ventilachsen 8 relativ zueinander ausgeglichen werden.

Das jeder Spule 12 zugeordnete Vorsprung-/Aussparungspaar 24, 26 dient nicht nur als axialer Anschlag, sondern auch als Verdrehsicherung für die jeweilige Spule 12, um sie lageorientiert in das Spulengehäuse 10 einsetzen zu können, wie anhand von Fig.3 leicht vorstellbar ist. Die Winkellage der Spulen 12 relativ zum Spulengehäuse 10 spielt eine Rolle, wenn in einem weiteren Montageschritt eine Kopfplatte 32 mit je zwei Durchgangsöffnungen 34 für die an die Spulen 12 kopfseitig angesetzten Stifte 16, 18 als Deckel in einen kopfseitigen Absatz 36 des Spulengehäuses 10 eingesetzt wird und die Durchgangsöffnungen 34 mit den zugeordneten Stiften 16, 18 fluchten müssen, wie Fig.3 zeigt. Auf die kopfseitigen Stifte 16, 18 als Träger der Spulendrahtenden 20 kann verzichtet werden, wenn die Enden 20 der Spulendrähte selbst ausreichend steif sind, um in vertikaler Stellung durch die Durchgangsöffnungen 34 der Kopfplatte 32 ragen zu können, was beispielsweise durch am Ende 20 doppelt gewickelte Spulendrähte möglich ist.

Die Kopfplatte 32 besteht aus einem ventilblockseitigen Leiterplattenträger 38, welcher auf seiner vom Ventilblock 6 weg weisenden Seite eine Leiterplatte 40 mit Leiterbahnen trägt, welche von den Spulendrahtenden 20 der Spulen 12 elektrisch kontaktiert sind, um die Spulen 12 von einer Regelelektronik ansteuern zu können (Fig.2). Die Leiterplatte 40 ist vorzugsweise auf den Leiterplattenträger 38 auflaminiert. Die Stifte 16, 18 der Spulen ragen durch die Durchgangsöffnungen 34 der Kopfplatte 32 hindurch, wobei der Querschnitt der Durchgangsöffnungen 34 relativ großzügig dimensioniert ist, um eine ungehinderte Ausrichtung der Spulen 12 innerhalb des Spulengehäuses 10 zu ermöglichen. Nach dem Aufsetzen der Kopfplatte 32 auf das Spulengehäuse 10 werden die Enden 20 der Spulendrähte von den Stiften 16, 18 derart abgewickelt, daß sie an den vorgesehenen Stellen mit den Leiterbahnen der Leiterplatte 40 in elektrischen Kontakt bringbar sind und zugleich noch eine ausreichend lose Spulendrahtlänge vorhanden ist, um den vollen Bewegungsspielraum der Spulen 12 innerhalb der Lagerhülsen 22 zu gewährleisten, ohne daß dabei die Spulendrähte unter Zugspannung geraten. Diese Situation ist anhand des in Fig.2 rechten Stiftes 16 veranschaulicht, wobei das Ende 20 des Spulendrahtes auf die zugeordnete Fläche 37 der Leiterbahn gelötet oder gebondet ist.

Die Kopfplatte 32 dient zugleich als Niederhalter und Klemmelement für die Spulen 12, indem die Leiterplatte 40 in Richtung der Spulen 12 weg ragende und beispielsweise als mit den Ventilachsen 8 koaxiale Zylinderabschnitte 42 ausgebildete Niederhalterelemente aufweist, welche je an einem radial inneren Abschnitt der vom Ventilblock 6 weg weisenden Stirnflächen 44 der Spulen 12 zur axialen Anlage bringbar ausgebildet sind, wenn die Kopfplatte 32 auf dem Spulengehäuse 10 in Sollage befestigt ist, beispielsweise durch Schraubverbindungen. Hierdurch werden die Spulen 12 nach ihrem Ausrichten zwischen der Kopfplatte 32 und den als Vorsprünge 24 ausgebildeten axialen Anschlägen des Spulengehäuses 10 form- und kraftschlüssig geklemmt, wobei sich der Formschluß aufgrund des spielbehafteten Eingriffs der Vorsprünge 24 in die zugeordneten Aussparungen 26 ergibt und die nach den Ventilachsen 8 ausgerichtete Lage der Spulen 12 dann durch den axialen Druck der Kopfplatte 32 kraftschlüssig und starr aufrechterhalten wird. Abschließend wird der elektrische Teil 4 der Bremsschlupfregelvorrichtung 1 durch einen auf das Spulengehäuse 10 aufgesetzten Deckel 46 verschlossen (Fig.3).

## Patentansprüche

1. Elektrohydraulische Druckregelvorrichtung, insbesondere Bremsschlupfregelvorrichtung (1) für Kraftfahrzeuge, beinhaltend ein oder mehrere elektromagnetisch betätigbare, in einem Ventilblock (6) aufgenommene Hydraulikventile mit den Ventilblock (6) in Richtung einer Ventilachse (8) zumindest teilweise überragenden Ventildomen, welche in je eine Spulenöffnung (14) einer von einem Spulenträger (10) gehaltenen elektrischen Spule (12) eingreifen, und mit von den Spulen (12) weg und durch Öffnungen (34) einer Kopfplatte (32) hindurch ragenden Kontaktelementen (20) zur elektrischen Ansteuerung der Spule (12), wobei
a) der Spulenträger durch ein auf den Ventilblock (6) aufsetzbares Spulengehäuse (10) gebildet wird, in welchem zu den Ventilachsen (8) koaxiale Durchgangsöffnungen als Lagerhülsen (22) ausgebildet sind, deren Innendurchmesser zur Bereitstellung von Bewegungsspiel für die Spulen (12) größer ist als der Außendurchmesser der zugeordneten Spule (12),
b) die Lagerhülsen (22) je einen axialen Anschlag (24) für die Spulen (12) aufweisen,
c) zumindest einige der Spulen (12) nach dem Einsetzen in die Lagerhülsen (22) am Spulenträger (10) in einer Ebene senkrecht zu den Ventilachsen (8) mit zwanglosem Bewegungsspiel aber lageorientiert gehalten und nach ihrer durch Eingriff der Ventildome in die zugeordneten Spulenöffnungen (14) erfolgten Ausrichtung in den Lagerhülsen (22) zwischen wenigstens einem am Spulenträger (10) festgelegten Niederhalter (32) und einem axialen Anschlag (24) in der ausgerichteten Position festgelegt sind, **dadurch gekennzeichnet, dass**
d) der Spulenträger (10) derart ausgebildet ist, dass die Spulen (12) von der dem Ventilblock (6) nach Zusammenbau der Druckregelvorrichtung sich ergebenden abgewandten Seite des Spulenträgers (10) in die Lagerhülsen (22) des Spulenträgers (10) eingesetzt sind, und
e) die Spulen (12) nach dem Ausrichten in den Lagerhülsen (22) des Spulenträgers (10) ohne Elastizitäten starr festgelegt sind.

2. Druckregelvorrichtung nach Anspruch 1, **dadurch gekennzeichnet, dass** der axiale Anschlag zugleich eine Verdrehsicherung für die Spulen (12) bildet und wenigstens einen von der Lagerhülse (22) nach radial innen ragenden stiftförmigen Vorsprung (24) aufweist, der in eine radial äußere Aussparung (26) der Spule (12) mit im Vergleich zum Vorsprung (24) größerer radialer Erstreckung eingreifbar ausgebildet ist.

3. Druckregelvorrichtung nach Anspruch 2, **dadurch gekennzeichnet, dass** der Vorsprung (24) jeweils an dem zum Ventilblock (6) weisenden Rand einer jeden Lagerhülse (22) und die Aussparung (26) an dem zum Ventilblock (6) weisenden Rand der zugeordneten Spule (12) angeordnet ist.

4. Druckregelvorrichtung nach Anspruch 3, **dadurch gekennzeichnet, dass** die zum Ventilblock (6) weisende Stirnfläche (28) zumindest einiger der Spulen (12) mit der zum Ventilblock (6) weisenden Bodenfläche (30) des Spulengehäuses (10) bündig ist.

5. Druckregelvorrichtung nach einem der vorhergehenden Ansprüche, **dadurch gekennzeichnet, dass** das Spulengehäuse (10) durch einen Spritzgussformling gebildet wird.

6. Druckregelvorrichtung nach einem der vorhergehenden Ansprüche, **dadurch gekennzeichnet, dass** der Niederhalter durch eine am Spulengehäuse (10) befestigbare Kopfplatte (32) mit von dieser in Richtung der Spulen (12) weg ragenden und mit den Ventilachsen (8) koaxialen Zylinderabschnitten (42) gebildet wird, welche an den vom Ventilblock (6) weg weisenden Stirnflächen (44) der Spulen (12) zur axialen Anlage bringbar ausgebildet sind.

7. Druckregelvorrichtung nach Anspruch 6, **dadurch gekennzeichnet, dass** die Kopfplatte (32) durch eine auf einen Leiterplattenträger (38) auflaminierte Leiterplatte (40) mit von Spulendrahtenden (20) der Spule (12) kontaktierten Leiterbahnen gebildet wird.

8. Druckregelvorrichtung nach Anspruch 7, **dadurch gekennzeichnet, dass** in der Kopfplatte (32) je Spule zwei Durchgangsöffnungen (34) für an die Spulen (12) kopfseitig angesetzte und die Kopfplatte (32) über ragend Stifte (16, 18) ausgebildet sind, um welche die Enden (20) der Spulendrähte schraubenförmig gewickelt sind.

9. Druckregelvorrichtung nach Anspruch 8, **dadurch gekennzeichnet, dass** die Enden (20) der Spulendrähte von den Stiften (16, 18) derart abwickelbar sind, dass sie an den vorgesehenen Stellen mit den Leiter bahne in elektrischen Kontakt bringbar und zugleich noch eine aus reichen lose Spulendrahtlänge vorhanden ist, um den vollen Bewegungsspielraum der Spulen (12) innerhalb der Lagerhülsen (22) zu gewährleisten ohne dass die Spulendrähte unter Zugspannung geraten.

## Claims

1. Electrohydraulic pressure control device, in particular brake slip control device (1) for motor vehicles, containing one or more electromagnetically actuable hydraulic valves which are accommodated in a valve block (6), with valve domes which at least partially project over the valve block (6) in the direction of a valve axis (8) and which engage in, in each case, one coil opening (14) of an electrical coil (12) which is held by a coil carrier (10), and with contact elements (20) projecting away from the coils (12) and through openings (34) in a head plate (32) in order to electrically actuate the coil (12), wherein
a) the coil carrier is formed by a coil housing (10) which can be fitted onto the valve block (6) and in which through-openings, which are coaxial with respect to the valve axes (8), are embodied as bearing sleeves (22), the internal diameter of which is larger than the external diameter of the assigned coil (12) in order to make available movement play for the coils (12),
b) the bearing sleeves (22) each have an axial stop (24) for the coils (12),
c) after the insertion into the bearing sleeves (22) on the coil carrier (10), at least some of the coils (12) are held in a plane perpendicular to the valve axes (8) with unconstrained movement play but in a positionally oriented fashion, and after their orientation which has taken place through engagement of the valve domes in the assigned coil openings (14), they are secured in the oriented position between at least one retaining element (32) secured to the coil carrier (10) and an axial stop (24),
**characterized in that**
d) the coil carrier (10) is embodied in such a way that the coils (12) are inserted into the bearing sleeves (22) of the coil carrier (10) from the side of the coil carrier (10) which faces away from the valve block (6) and which is produced after the assembly of the pressure control device,
and
e) after the orientation in the bearing sleeves (22) of the coil carrier (10) the coils (12) are secured rigidly without elasticities.

2. Pressure control device according to Claim 1, **characterized in that** the axial stop at the same time forms an anti-rotation protection for the coils (12) and has at least one pin-shaped projection (24) which projects radially inwards from the bearing sleeve (22) and is embodied in such a way that it can engage in a radially outer cut-out (26) of the coil (12) with a radial extent which is relatively large compared to the projection (24).

3. Pressure control device according to Claim 2, **characterized in that** the projection (24) is arranged in each case at the edge, pointing to the valve block (6), of each bearing sleeve (22), and the cut-out (26) is arranged at the edge, pointing to the valve block (6) of the assigned coil (12).

4. Pressure control device according to Claim 3, **characterized in that** the end face (28), pointing to the valve block (6), of at least some of the coils (12) is flush with the floor face (30), pointing to the valve block (6), of the coil housing (10).

5. Pressure control device according to one of the preceding claims, **characterized in that** the coil housing (10) is formed by an injection moulding.

6. Pressure control device according to one of the preceding claims, **characterized in that** the retaining element is formed by a head plate (32) which can be attached to the coil housing (10) and has cylinder sections (42) which project away from the latter in the direction of the coils (12), are coaxial with the valve axes (8) and are embodied in such a way that they can be placed in axial abutment against the end faces (44), pointing away from the valve block (6), of the coils (12).

7. Pressure control device according to Claim 6, **characterized in that** the head plate (32) is formed by a printed circuit board (40) which is laminated onto a printed circuit board carrier (38) and has conductor tracks with which the coil wire ends (20) of the coil (12) come into contact.

8. Pressure control device according to Claim 7, **characterized in that** two through-openings (34) for pins (16, 18) which fit onto the head sides of the coils (12) and project over the head plate (32) are formed in the head plate (32) of each coil, and the ends (20) of the coil wires are wound in a helical shape around said pins (16, 18).

9. Pressure control device according to Claim 8, **characterized in that** the ends (20) of the coil wires of the pins (16, 18) can be unwound in such a way that at the points provided they can be placed in electrical contact with the conductor tracks and at the same time a sufficient coil wire length is still present to ensure the full freedom of movement of the coils (12) within the bearing sleeves (22), without the coil wires being placed under tensile stress.

## Revendications

1. Dispositif de régulation de pression électrohydraulique, en particulier dispositif de régulation du glissement des freins (1) pour véhicules automobiles, contenant une ou plusieurs soupapes hydrauliques à commande électromagnétique, reçues dans un bloc soupapes (6), avec des dômes de soupape dépassant au moins en partie du bloc soupapes (6) dans la direction d'un axe de soupape (8), lesquels viennent en prise dans une ouverture de bobine respective (14) d'une bobine électrique (12) maintenue par un support de bobine (10), et avec des éléments de contact (20) saillant à l'écart des bobines (12) et à travers des ouvertures (34) d'une plaque de tête (32), pour la commande électrique de la bobine (12),
a) le support de bobine étant formé par un boîtier de bobine (10) pouvant être posé sur le bloc soupapes (6), dans lequel boîtier sont réalisées des ouvertures de passage en tant que douilles palier (22) coaxiales aux axes de soupape (8), dont le diamètre intérieur pour fournir un jeu de déplacement pour les bobines (12) est supérieur au diamètre extérieur de la bobine associée (12),
b) les douilles palier (22) présentant à chaque fois une butée axiale (24) pour les bobines (12),
c) au moins certaines des bobines (12), après l'insertion dans les douilles palier (22), étant maintenues sur le support de bobine (10) dans un plan perpendiculaire aux axes de soupape (8) avec un jeu de déplacement libre mais de manière orientée en position et, après leur orientation par engagement des dômes de soupape dans les ouvertures de bobine associées (14), étant fixées dans la position alignée dans les douilles palier (22) entre au moins un dispositif de maintien vers le bas (32) fixé sur le support de bobine (10) et une butée axiale (24),
**caractérisé en ce que**
d) le support de bobine (10) est réalisé de telle sorte que les bobines (12) soient insérées dans les douilles palier (22) du support de bobine (10) depuis le côté du support de bobine (10) opposé au bloc soupapes (6) obtenu après l'assemblage du dispositif de régulation de pression, et
e) les bobines (12) sont fixées rigidement après l'alignement dans les douilles palier (22) du support de bobine (10) sans élasticité.

2. Dispositif de régulation de pression selon la revendication 1, **caractérisé en ce que** la butée axiale forme en même temps une fixation contre la rotation pour les bobines (12), et présente au moins une saillie (24) en forme de goupille saillant radialement vers l'intérieur depuis la douille palier (22), qui est réalisée de manière à pouvoir être saisie dans un évidement radialement extérieur (26) de la bobine (12) avec une étendue radiale plus grande par comparaison avec la saillie (24).

3. Dispositif de régulation de pression selon la revendication 2, **caractérisé en ce que** la saillie (24) est disposée à chaque fois sur le bord de chacune des douilles palier (22) tourné vers le bloc soupapes (6) et l'évidement (26) est disposé sur le bord de la bobine associée (12) tourné vers le bloc soupapes (6).

4. Dispositif de régulation de pression selon la revendication 3, **caractérisé en ce que** la face frontale (28) tournée vers le bloc soupapes (6) d'au moins certaines des bobines (12) est en affleurement avec la face de fond (30) du boîtier de bobine (10) tournée vers le bloc soupapes (6).

5. Dispositif de régulation de pression selon l'une quelconque des revendications précédentes, **caractérisé en ce que** le boîtier de bobine (10) est formé par une ébauche moulée par injection.

6. Dispositif de régulation de pression selon l'une quelconque des revendications précédentes, **caractérisé en ce que** le dispositif de maintien vers le bas est formé par une plaque de tête (32) pouvant être fixée sur le boîtier de bobine (10) avec des portions cylindriques (42) saillant à l'écart de celle-ci dans la direction des bobines (12) et coaxiales aux axes de soupape (8), qui sont réalisées en vue d'être amenées en appui axial contre les faces frontales (44) des bobines (12) tournées à l'écart du bloc soupapes (6).

7. Dispositif de régulation de pression selon la revendication 6, **caractérisé en ce que** la plaque de tête (32) est formée par une carte à circuits (40) plaquée sur un support de carte à circuits (38), avec des pistes conductrices en contact avec des extrémités de fils de bobine (20) de la bobine (12).

8. Dispositif de régulation de pression selon la revendication 7, **caractérisé en ce que** deux ouvertures de passage (34) pour des goupilles (16, 18) placées du côté de la tête sur les bobines (12) et dépassant de la plaque de .tête (32) sont réalisées dans la plaque de tête (32) pour chaque bobine, et les extrémités (20) des fils de bobine sont enroulées en hélice autour de ces goupilles.

9. Dispositif de régulation de pression selon la revendication 8, **caractérisé en ce que** les extrémités (20) des fils de bobine peuvent être déroulées des goupilles (16, 18) de telle sorte qu'elles puissent être amenées en contact électrique aux endroits prévus avec les pistes conductrices, et qu'il subsiste encore une longueur de fil de bobine suffisante pour garantir un jeu de déplacement complet des bobines (12) à l'intérieur des douilles palier (22) sans soumettre les fils de bobine à une contrainte de traction.
